Europäisches Patentamt

European Patent Office

Office européen des brevets

(19)

(11)  **EP 1 216 780 B1**

(12)  **FASCICULE DE BREVET EUROPEEN**

(45) Date de publication et mention
de la délivrance du brevet:
**07.06.2006  Bulletin 2006/23**

(51) Int Cl.:
*B23K 9/09* *(2006.01)*      *B23K 9/10* *(2006.01)*

(21) Numéro de dépôt: **01403070.4**

(22) Date de dépôt: **29.11.2001**

(54) **Procédé et dispositif de soudage à l'arc pulse**

Verfahren und Vorrichtung zum Impulslichtbogenschweissen

Method and apparatus for pulse arc welding

(84) Etats contractants désignés:
**AT BE CH CY DE DK ES FI FR GB GR IE IT LI LU
MC NL PT SE TR**

(30) Priorité:  **21.12.2000  FR 0016759**

(43) Date de publication de la demande:
**26.06.2002  Bulletin 2002/26**

(73) Titulaires:
• **L'Air Liquide, Société Anonyme à Directoire et
Conseil de Surveillance pour l'Etude et
L'Exploitation des Procédés Georges Claude
75321 Paris Cedex 07 (FR)**
• **LA SOUDURE AUTOGENE FRANCAISE
F-75007 Paris (FR)**

(72) Inventeurs:
• **Briand, Francis
75009 Paris (FR)**
• **Caillibotte, Georges
78780 Maurecourt (FR)**
• **Mas, Christophe
95300 Pontoise (FR)**
• **Eyschen, Jean-Pierre
95530 La Frette sur Seine (FR)**

(74) Mandataire: **Pittis, Olivier et al
L'Air Liquide S.A.
75, quai d'Orsay
75321 Paris Cedex 07 (FR)**

(56) Documents cités:
**EP-A- 0 043 588          DE-A- 3 103 247
DE-A- 3 742 402          US-A- 5 670 071**

**Description**

La présente invention concerne un procédé, un dispositif conformément au preambule respectif des revendications 1 et 13 (voir, par exemple, DE-A- 37 42 402) et une installation de soudage à l'arc pulsé, en particulier un procédé de soudage MIG (pour Metal Inert Gas = avec gaz inerte vis-à-vis du métal) ou MAG (pour Metal Active Gas = avec gaz actif vis-à-vis du métal)

Le soudage à l'arc à régime pulsé a été mis au point pour pallier aux inconvénients du soudage à régime globulaire qui, de par son mode de transfert instable et son caractère projetant, ne permettait pas d'augmenter la productivité dans des conditions de soudage acceptables.

En effet, en soudage à l'arc des aciers au carbone et des aciers inoxydables, dès que l'on souhaite augmenter la quantité de métal déposé en conservant des propriétés d'emplois corrects, il faut augmenter l'intensité du courant et, en l'absence de mise en oeuvre d'un régime pulsé, il a été constaté qu'on rentre rapidement en régime globulaire.

Or, le régime pulsé permet un soudage en position qui n'est bien souvent pas praticable ou difficile en régime globulaire.

Par ailleurs, le caractère non projetant du régime pulsé, quand la synergie des différents paramètres opératoires, est correcte, permet, notamment sur les aciers inoxydables, de diminuer les opérations de parachèvement, tel que l'enlèvement des projections.

En outre, le soudage pulsé trouve également un champ d'application intéressant quand on le compare au régime de pulvérisation axiale (régime spray) qui, en nécessitant un courant de soudage assez élevé et en induisant un taux de dépôt et une largeur de bain importants, n'est généralement utilisé que sur des épaisseurs à souder conséquentes et en position horizontale, c'est-à-dire qu'il est limité au soudage à plat.

En permettant, à vitesse fil identique et donc à quantité de métal déposé identique, de réduire l'énergie de soudage, le régime pulsé remédie en partie à ces inconvénients et autorise, suivant l'assemblage à réaliser, le soudage non seulement à plat mais aussi en position avec une qualité de transfert comparable à celle du régime spray.

Le régime pulsé est également très utilisé pour le soudage des alliages légers, tel l'aluminium par exemple, par lesquels le régime de courts-circuits et le globulaire sont difficilement praticables à cause des défauts qu'ils occasionnent, à savoir porosités et collage.

Dans ce cas, le régime pulsé permet de souder correctement avec des énergies qui autorisent le soudage des faibles épaisseurs jusqu'à 1mm et le soudage en position alors que le régime spray, traditionnellement employé, est plutôt synonyme de productivité.

Des procédés de soudage à l'arc en régime spray ou en régime pulsé sont décrits dans les documents suivants : WO-A-98/22247, EP-A-909604, Welding and Cutting, P. Houldcroft et R. John, 1988, p. 80-83, BE-A-817637, JP-A-57124572, JP-A-56134075, JP-A-59078776, GB-A-2268009, US-A-5,192,851, US-A-3,528,100, US-A-3,956,610, US-A-5,432,317, US-A-4,912,299, US-A-5,672,286, US-A-4,366,362 et EP-A-422763.

Par ailleurs, le document DE-A-3742402 enseigne un procédé de soudage à l'arc avec électrode fusible, dans lequel les paramètres de soudage, tels que vitesse fil, courant de base et de pulsation, temps bas et temps de pulsation, sont choisis de manière à résoudre des équations mathématiques données.

Le document EP-A-43588 décrit une machine de soudage à l'arc pulsé avec fil fusible comprenant des moyens de détermination de divers paramètres de soudage, tels la tension d'arc, des moyens de contrôle de la quantité d'énergie appliquée à l'électrode, des moyens de pulsation et des moyens pour contrôler la largeur et la hauteur de la pulsation en fonction de relations fonctionnelles préétablies.

Le document US-A-5,525,778 porte sur un procédé de soudage à l'arc avec électrode fusible avec pulsations du courant, dans lequel la forme des ondes de courant est commandée par l'intermédiaire de la tension d'arc, en particulier les durées de pulsation et les valeurs de pic sont contrôlées pour donner un courant optimum par rapport à la vitesse d'amenée du fil et à la configuration de pièce considérée.

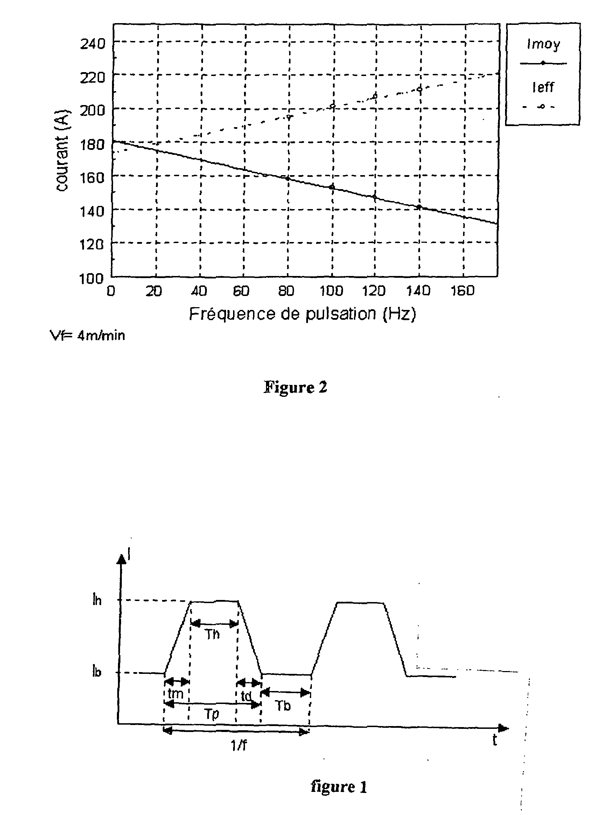

De façon générale, en régime pulsé, l'impulsion de courant peut revêtir différentes formes. La forme trapézoïdale est cependant pratiquement la seule à être utilisée au plan industriel et elle est, en général, caractérisée par les paramètres indiqués à la figure 1 ci-annexée.

Si l'on veut rendre facilement accessible le soudage MIG/MAG pulsé à la plupart des opérateurs, il faut réaliser ce que l'on appelle des courbes de synergies ou programmes de soudage.

L'élaboration d'une synergie en courant pulsé consiste en la détermination pour chaque fil en fonction de sa nature et son diamètre, pour chaque gaz de protection et chaque vitesse d'avance de fil, des valeurs des paramètres décrivant le pulse de courant qui satisfont au mieux les critères selon lesquels est jugé l'opération de soudage.

Cette détermination est assez difficile à réaliser car elle est en général empirique et ne peut se faire que par le biais de nombreux essais.

Toutefois, c'est la condition indispensable à la diffusion et à l'utilisation d'un procédé de soudage pour que l'opérateur de soudage ait un minimum de réglage à faire.

Ainsi, classiquement, l'opérateur choisit le couple fil/gaz et suivant la vitesse d'avance du fil désiré, la courbe de synergie précédemment déterminée permet d'attribuer les bonnes valeurs aux paramètres du pulse de courant.

En général, une bonne synergie en courant pulsé doit comporter un seul détachement de goutte par pulse, être exempt de projections et avoir une hauteur d'arc la plus petite possible.

L'élaboration de la synergie ou du programme nécessite le choix des valeurs à affecter aux paramètres du pulse en sachant que :

- le courant haut (Ih) ne peut être inférieur à un certain seuil si l'on veut que la goutte se détache, ce seuil étant donné par la valeur du courant pour laquelle commence le régime spray en soudage sous flux gazeux avec fil fusible en courant continu ; et
- si l'on ne veut pas de projections, il faut que le détachement de la goutte se produise à des niveaux de courant limités.

D'autre part, une fois ce travail réalisé pour plusieurs vitesses d'avance du fil, il faut s'assurer que l'évolution en fonction de la vitesse d'avance du fil des paramètres décrivant le pulse de courant ne soit pas trop heurtée.

En effet, la vitesse d'avance du fil choisie par l'opérateur est libre, et elle ne correspond pas toujours aux vitesses d'avance du fil qui ont été utilisées pour décrire la courbe de synergie.

Dans ce cas, il y a nécessité d'interpoler les valeurs des paramètres du pulse à partir des courbes synergiques et, si elles sont trop heurtées, le résultat de soudage obtenu peut ne pas être satisfaisant et il faut alors recommencer.

La détermination des courbes synergiques est donc habituellement assez difficile et nécessite de réaliser de nombreux essais de soudage, le nombre étant d'autant plus élevé que les paramètres à prendre en compte son nombreux car, plus il y a de paramètres à considérer, plus il y a de combinaisons possibles de ces divers paramètres entre eux et donc plus il y a d'essais à réaliser, sans toutefois être certain du résultat qui en découlera.

Le problème qui se pose alors est de disposer d'un procédé de soudage à l'arc pulsé permettant d'obtenir un soudage efficace des aciers au carbone, des aciers inoxydables, de l'aluminium ou des alliages d'aluminium et qui permette d'éviter de réaliser de nombreux essais de soudage pour déterminer les conditions et paramètres de soudage permettant de conduire à de bons résultats de soudage, en particulier la vitesse d'amenée du fil et l'ensemble des paramètres des impulsions de courant devant être appliquées pour la vitesse d'amenée du fil choisie, à savoir la valeur de courant moyen et la valeur de courant efficace.

De là, un premier but de la présente invention est alors de proposer un procédé de soudage à l'arc à régime pulsé des aciers au carbone, des aciers inoxydables, de l'aluminium ou des alliages d'aluminium, avec mise en oeuvre d'une protection gazeuse, présentant une grande flexibilité et conduisant à des résultats satisfaisants en termes de qualité de soudage.

Un deuxième but de la présente invention est alors de proposer un procédé de soudage à l'arc à régime pulsé, MIG ou MAG, permettant de déterminer facilement, en fonction de la vitesse d'amenée du fil souhaitée, l'ensemble des paramètres des impulsions de courant, à savoir la valeur de courant moyen (Imoy) et la valeur de courant efficace (Ieff) devant être appliquées, pour que de bons résultats de soudage soient obtenus.

De là, la présente invention concerne un procédé de soudage à l'arc à régime pulsé d'une ou plusieurs pièces en acier au carbone, en acier inoxydable, en aluminium ou en alliage d'aluminium, avec mise en oeuvre d'une protection gazeuse, dans lequel on alimente une torche de soudage à l'arc électrique avec au moins un fil fusible à une vitesse d'amenée de fil (Vfil) et on soumet ledit fil fusible à des impulsions de courant pour obtenir une fusion de l'extrémité dudit fil fusible et le détachement d'une goutte de métal fondu par impulsion de courant, et dans lequel, pour une fréquence de pulsation et des paramètres temps (Tp, Th, tm, td) du cycle de pulsation donnés, on choisit et/ou on met en oeuvre une vitesse d'amenée de fil (Vfil), une valeur de courant moyen (Imoy) et une valeur de courant efficace (Ieff) telles que :

$$Imoy = A1 \times Vfil + B1 \quad \text{avec} \quad 5 < A1 < 45 \quad \text{et} \quad 0 < B1 < 50 \text{ ,}$$

et

$$Ieff = A2 \times Vfil + B2 \quad \text{avec} \quad 5 < A2 < 45 \quad \text{et} \quad 40 < B2 < 100$$

où Imoy et Ieff sont exprimées en Ampères et Vfil est exprimée en $m.min^{-1}$.

Selon le cas, le procédé de l'invention peut comprendre l'une ou plusieurs des caractéristiques suivantes :

- la ou les pièces à souder sont en acier au carbone et en ce qu'on choisit la valeur de courant moyen (Imoy) et la valeur de courant efficace (Ieff) telles que :

$$Imoy = A1 \times Vfil + B1 \quad \text{avec} \quad 20 < A1 < 40 \quad \text{et} \quad 0 < B1 < 30 ,$$

et

$$Ieff = A2 \times Vfil + B2 \quad \text{avec} \quad 19 < A2 < 39 \quad \text{et} \quad 40 < B2 < 100.$$

- la ou les pièces à souder sont en acier inoxydable et en ce qu'on choisit la valeur de courant moyen (Imoy) et la valeur de courant efficace (Ieff) telles que :

$$Imoy = A1 \times Vfil + B1 \quad \text{avec} \quad 10 < A1 < 40 \quad \text{et} \quad 0 < B1 < 40 ,$$

et

$$Ieff = A2 \times Vfil + B2 \quad \text{avec} \quad 9 < A2 < 39 \quad \text{et} \quad 40 < B2 < 100.$$

- la ou les pièces à souder sont en aluminium ou en alliage d'aluminium et en ce qu'on choisit la valeur de courant moyen (Imoy) et la valeur de courant efficace (Ieff) telles que :

$$Imoy = A1 \times Vfil + B1 \quad \text{avec} \quad 5 < A1 < 30 \quad \text{et} \quad 0 < B1 < 20 ,$$

et

$$Ieff = A2 \times Vfil + B2 \quad \text{avec} \quad 5 < A2 < 25 \quad \text{et} \quad 40 < B2 < 65.$$

- la vitesse d'amenée de fil (Vfil) est comprise entre 1 et 20 m.min$^{-1}$, de préférence 2 et 15 m.min$^{-1}$
- la fréquence de pulsation est comprise entre 20 et 300 Hz, de préférence entre 50 et 200 Hz.
- le rapport (Ieff / Imoy) de la valeur de courant efficace (Ieff) à la valeur de courant moyen (Imoy) est compris entre 1.05 et 2, de préférence entre 1.1 et 1.8.
- la ou les pièces à souder sont en acier au carbone et en ce que le rapport (Ieff / Imoy) de la valeur de courant efficace (Ieff) à la valeur de courant moyen (Imoy) est compris entre 1.05 et 2, de préférence entre 1.05 et 1,6.
- la ou les pièces à souder sont en acier inoxydable et en ce que le rapport (Ieff / Imoy) de la valeur de courant efficace (Ieff) à la valeur de courant moyen (Imoy) est compris entre 1.05 et 2, de préférence entre 1.1 et 1.8.
- la ou les pièces à souder sont en aluminium ou en alliage d'aluminium et en ce que le rapport (Ieff / Imoy) de la valeur de courant efficace (Ieff) à la valeur de courant moyen (Imoy) est compris entre 1.05 et 2, de préférence entre 1,05 et 1,5.
- la ou les pièces à souder ont une épaisseur de 0.5 mm à 10 mm, de préférence de 0.8 à 6 mm.
- la protection gazeuse est constituée d'un gaz ou mélange gazeux choisi parmi l'hélium, l'argon, le dioxyde de carbone, l'oxygène, l'azote et l'hydrogène.
- le fil fusible a un diamètre compris entre 0.6 mm et 2.2 mm, de préférence entre 0.8 mm et 1.6 mm.
- le soudage est de type MIG pulsé ou MAG pulsé.
- le fil est un fil plein ou un fil fourré.

L'invention porte aussi sur un dispositif de soudage à l'arc à régime pulsé susceptible de mettre en oeuvre un procédé de l'invention comportant :

- des moyens de sélection de fréquence et des paramètres temps (Tp, Th, tm, td) du cycle de pulsation permettant de régler, ajuster ou sélectionner une fréquence de pulsation et des paramètres temps (Tp, Th, tm, td) du cycle de pulsation,
- des moyens de sélection de vitesse de fil permettant de régler, ajuster ou sélectionner une vitesse d'amenée de fil (Vfil),

- des moyens de détermination des valeurs de courant moyen (Imoy) et de courant efficace (Ieff) permettant de déterminer ou calculer au moins une valeur de courant moyen (Imoy) et au moins une valeur de courant efficace (Ieff), telles que :

$$Imoy = A1 \times Vfil + B1 \quad avec \quad 5 < A1 < 45 \quad et \quad 5 < B1 < 50 ,$$

et

$$Ieff = A2 \times Vfil + B2 \quad avec \quad 5 < A2 < 45 \quad et \quad 45 < B2 < 110$$

où Imoy et Ieff sont exprimées en Ampères et Vfil est exprimée en m.min$^{-1}$, et

- des moyens d'ajustage de courant permettant d'ajuster le courant de soudage en réponse à la détermination ou au calcul des valeurs de courant moyen (Imoy) et de courant efficace (Ieff) par lesdits moyens de détermination des valeurs de courant moyen (Imoy) et de courant efficace (Ieff).

Le dispositif de l'invention peut comprendre ou est constitué d'au moins un générateur de courant de soudage.

En outre, l'invention a aussi trait à une installation de soudage comportant au moins un dispositif selon l'invention, au moins une torche de soudage, au moins une source de fil de soudage et au moins une source de gaz de protection.

En effet, les inventeurs de la présente invention ont mis en évidence que, de manière surprenante, dès lors que pour un couple fil/gaz donné, une vitesse fil (Vfil) donnée et une fréquence de pulsation donnée, il suffisait de choisir des valeurs de courant moyen (Imoy) et de courant efficace (Ieff) correspondant à ces paramètres et telles que données ci-dessus pour obtenir des paramètres de fonctionnement conduisant à un procédé de soudage pulsé efficace, c'est-à-dire un procédé de soudage donnant un seul détachement de goutte par pulsation, qui soit exempt de projections de métal fondu et qui permette de conserver une hauteur d'arc constante.

Comme évoqué ci-dessus, en régime pulsé, l'impulsion de courant peut revêtir différentes formes mais la forme trapézoïdale est pratiquement la seule à être utilisée au plan industriel et se caractérise par les paramètres indiqués à la figure 1 ci-annexée.

Sur la figure 1, ont été représentées deux impulsions de courant successives de forme trapézoïdale ; l'axe des abscisses représentant le temps (t) en millisecondes et l'axe des ordonnées représentant l'intensité (I) du courant en Ampères.

Chaque impulsion de courant est formée :

- d'une pente de montée de courant depuis une valeur de courant bas (Ib) jusqu'à une valeur de courant haut (Ih) durant un temps de montée (tm) de courant ;
- d'un palier de courant haut formant le haut du trapèze durant un temps haut (Th) d'impulsion durant lequel se détache la goutte de métal fondu à l'extrémité du fil ; et
- d'une pente de descente de courant depuis la valeur de courant haut (Ih) jusqu'à la valeur de courant bas (Ib) durant un temps de descente (td) de courant, ledit temps de descente (td) pouvant être égal ou non au temps de montée (tm) de courant.

La somme des durées du temps de montée (tm), du temps haut (Th) et du temps de descente (td) de courant constitue le temps de pulsation (Tp).

Une impulsion trapézoïdale est séparée de l'impulsion suivante par un pallier de courant bas durant un temps bas (Tb).

La somme des durées du temps de pulsation (Tp) et du temps bas (Tb) constitue l'inverse de la fréquence (1/f) exprimée en Hertz.

Pour pouvoir aboutir au procédé de la présente invention, plusieurs essais ont été réalisés par les inventeurs et sont consignés dans les exemples ci-après.

<u>Essais</u>

Dans le Tableau I ci-après, ont été consignés plusieurs jeux de paramètres obtenus pour une vitesse fil (Vfil) de 4m.mn$^{-1}$, une fréquence (f) de 80Hz et un couple (Imoy, Ieff) avec Imoy = 146 A et Ieff = 188 A, donnant les résultats de soudage similaires en soudage à régime pulsé de deux pièces en acier au carbone.

Tableau I

| lb (A) | 97 | 85 | 74 | 69 |
|---|---|---|---|---|
| lh (A) | 536 | 430 | 420 | 354 |
| Th (ms) | 0.4 | 1.2 | 0.8 | 2.4 |
| tm = td (ms) | 1 | 1 | 1.8 | 1 |

Au vu de ce Tableau I, les inventeurs ont constaté que, pour un même couple fil/gaz, une même vitesse d'avance du fil (Vfil) et une même fréquence de pulsation, il n'existait qu'un domaine étroit de variations du couple (Imoy, Ieff) dans lequel le transfert de la goutte était correct et que, dans cet intervalle, si on augmentait la valeur de Imoy, il fallait obligatoirement diminuer la valeur de Ieff pour conserver l'efficacité du procédé de soudage.

Dit autrement, au-delà d'un couple (Imoy minimum ; Ieff maximum), on ne peut pas obtenir un transfert de métal du fil vers le joint de soudure sans court-circuit et au-delà d'un couple (Imoy maximum ; Ieff minimum), le détachement des gouttes devient erratique et conduit à l'apparition de grosses gouttes de métal fondu, ce qui n'est pas souhaitable.

Dans le Tableau II ci-après, ont été indiqués, à titre d'exemple, les couples limites déterminés pour une vitesse de fil (Vfil) de 4m.mn$^{-1}$ et une fréquence de pulsation de 100 Hz ; on notera que ces couples limites conservent aussi la hauteur d'arc.

Tableau II

| Imoy (A) | Ieff (A) |
|---|---|
| 128 | 215 |
| 143 | 195 |

Partant de là, les inventeurs de l'invention ont également étudié l'évolution des couples (Imoy, Ieff) de fonctionnement en fonction de la fréquence de pulsation et tout en conservant une hauteur d'arc la plus courte possible (environ 3 à 4 mm) et pour une même vitesse d'avance du fil.

L'évolution de ces couples est représentée sur la figure 2 pour une vitesse de 4m.mn$^{-1}$.

Au vu des résultats obtenus, il ressort qu'il n'est pas possible de conserver longtemps le même couple (Imoy ; Ieff) lorsqu'on fait varier la fréquence et que, quand on diminue cette fréquence, l'écart entre Imoy et Ieff diminue.

Toutefois, il apparaît qu'il existe une fréquence minimum et une fréquence maximum en deçà et au delà de laquelle il est difficile de procéder.

Ces limites sont fixées par le diamètre de la goutte obtenue, la limite basse en fréquence étant fixée à environ 1,2 fois le diamètre du fil et la limite haute en fréquence à environ 0,8 fois le diamètre du fil.

De ces essais, il découle que tous les paramètres décrivant l'impulsion de courant pour un couple fil/gaz et une vitesse fil (Vfil) déterminés, peuvent être inclus dans une aire de l'espace des Imoy et Ieff, et que cette aire peut être déterminée par quelques expériences simples par détermination d'un couple (Imoy, Ieff) qui fonctionne pour une fréquence donnant une goutte de l'ordre de grandeur du diamètre du fil, excursion en fréquence et détermination du couple (Imoy, Ieff) pour les fréquences limites et détermination des couples limites au delà et en deçà desquels le détachement n'est plus correct pour ces fréquences limites.

Ainsi, en représentant l'évolution des valeurs de Imoy et Ieff en fonction de la vitesse fil (Vfil) obtenues avec un fil fusible commercialisé par la Société LA SOUDURE AUTOGENE FRANCAISE sous l'appellation NERTALIC™ 70S de diamètre 1,2 mm et en employant un gaz de protection commercialisé par la Société L'AIR LIQUIDE sous l'appellation ARCAL™ 21 (mélange Ar/CO2), on constate que l'évolution est pratiquement linéaire sur toute la plage de vitesse fil considérée, les couples étant déterminés pour 2m.min$^{-1}$ et 8m. min$^{-1}$ de vitesse fil (Vfil) et pour une fréquence pour chaque vitesse fil correspondant à un diamètre théorique de goutte constant de 0,88 fois le diamètre du fil.

En procédant de la même manière, les inventeurs ont pu déterminer l'ensemble des points de fonctionnement pour l'ensemble des couples fil/gaz en soudage MIG/MAG pulsé, pour une fréquence de pulsation et une vitesse d'amenée de fil (Vfil) données, et ont alors déterminé que, pour obtenir un soudage efficace, il fallait chosir une valeur de courant moyen (Imoy) et une valeur de courant efficace (Ieff) telles que :

$$Imoy = A1 \times Vfil + B1 \quad \text{avec} \quad 5 < A1 < 45 \quad \text{et} \quad 0 < B1 < 50,$$

et

$$\text{Ieff} = A2 \times \text{Vfil} + B2 \quad \text{avec} \quad 5 < A2 < 45 \quad \text{et} \quad 40 < B2 < 100$$

avec Imoy et Ieff exprimées en Ampères et Vfil exprimée en m.min$^{-1}$.

**Revendications**

1. Procédé de soudage à l'arc à régime pulsé d'une ou plusieurs pièces en acier au carbone, en acier inoxydable, en aluminium ou en alliage d'aluminium, avec mise en oeuvre d'une protection gazeuse, dans lequel on alimente une torche de soudage à l'arc électrique avec au moins un fil fusible à une vitesse d'amenée de fil (Vfil) et on soumet ledit fil fusible à des impulsions de courant pour obtenir une fusion de l'extrémité dudit fil fusible et le détachement d'une goutte de métal fondu par impulsion de courant, **caractérisé en ce que**, pour une fréquence de pulsation et des paramètres temps (Tp, Th, tm, td) du cycle de pulsation donnés, on choisit et/ou on met en oeuvre une vitesse d'amenée de fil (Vfil), une valeur de courant moyen (Imoy) et une valeur de courant efficace (Ieff) telles que :

$$\text{Imoy} = A1 \times \text{Vfil} + B1 \quad \text{avec} \quad 5 < A1 < 45 \quad \text{et} \quad 0 < B1 < 50,$$

et

$$\text{Ieff} = A2 \times \text{Vfil} + B2 \quad \text{avec} \quad 5 < A2 < 45 \quad \text{et} \quad 40 < B2 < 100$$

où Imoy et Ieff sont exprimées en Ampères et Vfil est exprimée en m.min$^{-1}$.

2. Procédé selon la revendication 1, **caractérisé en ce que** la ou les pièces à souder sont en acier au carbone et **en ce qu'**on choisit la valeur de courant moyen (Imoy) et la valeur de courant efficace (Ieff) telles que :

$$\text{Imoy} = A1 \times \text{Vfil} + B1 \quad \text{avec} \quad 20 < A1 < 40 \quad \text{et} \quad 0 < B1 < 30,$$

et

$$\text{Ieff} = A2 \times \text{Vfil} + B2 \quad \text{avec} \quad 19 < A2 < 39 \quad \text{et} \quad 40 < B2 < 100$$

où Imoy et Ieff sont exprimées en Ampères et Vfil est exprimée en m.min$^{-1}$.

3. Procédé selon la revendication 1, **caractérisé en ce que** la ou les pièces à souder sont en acier inoxydable et **en ce qu'**on choisit la valeur de courant moyen (Imoy) et la valeur de courant efficace (Ieff) telles que :

$$\text{Imoy} = A1 \times \text{Vfil} + B1 \quad \text{avec} \quad 10 < A1 < 40 \quad \text{et} \quad 0 < B1 < 40,$$

et

$$\text{Ieff} = A2 \times \text{Vfil} + B2 \quad \text{avec} \quad 9 < A2 < 39 \quad \text{et} \quad 40 < B2 < 100$$

où Imoy et Ieff sont exprimées en Ampères et Vfil est exprimée en m.min$^{-1}$.

**4.** Procédé selon la revendication 1, **caractérisé en ce que** la ou les pièces à souder sont en aluminium ou en alliage d'aluminium et **en ce qu'**on choisit la valeur de courant moyen (Imoy) et la valeur de courant efficace (Ieff) telles que :

$$\text{Imoy} = A1 \times \text{Vfil} + B1 \quad \text{avec} \quad 5 < A1 < 30 \quad \text{et} \quad 0 < B1 < 20 \,,$$

et

$$\text{Ieff} = A2 \times \text{Vfil} + B2 \quad \text{avec} \quad 5 < A2 < 25 \quad \text{et} \quad 40 < B2 < 65$$

où Imoy et Ieff sont exprimées en Ampères et Vfil est exprimée en m.min$^{-1}$.

**5.** Procédé selon l'une des revendications 1 à 4, **caractérisé en ce que** la vitesse d'amenée de fil (Vfil) est comprise entre 1 et 20 m.min$^{-1}$, de préférence entre 2 et 15 m.min$^{-1}$

**6.** Procédé selon l'une des revendications 1 à 5, **caractérisé en ce que** la fréquence de pulsation est comprise entre 20 et 300 Hz, de préférence entre 50 et 200 Hz.

**7.** Procédé selon l'une des revendications 1 à 6, **caractérisé en ce que** le rapport (Ieff / Imoy) de la valeur de courant efficace (Ieff) à la valeur de courant moyen (Imoy) est compris entre 1.05 et 2, de préférence entre 1.1 et 1.8.

**8.** Procédé selon l'une des revendications 1, 2 ou 5 à 7, **caractérisé en ce que** la ou les pièces à souder sont en acier au carbone et **en ce que** le rapport (Ieff / Imoy) de la valeur de courant efficace (Ieff) à la valeur de courant moyen (Imoy) est compris entre 1.05 et 2, de préférence entre 1.05 et 1,6.

**9.** Procédé selon l'une des revendications 1, 3 ou 5 à 7, **caractérisé en ce que** la ou les pièces à souder sont en acier inoxydable et **en ce que** le rapport (Ieff / Imoy) de la valeur de courant efficace (Ieff) à la valeur de courant moyen (Imoy) est compris entre 1.05 et 2, de préférence entre 1.1 et 1.8.

**10.** Procédé selon l'une des revendications 1 ou 4 à 7, **caractérisé en ce que** la ou les pièces à souder sont en aluminium ou en alliage d'aluminium et **en ce que** le rapport (Ieff / Imoy) de la valeur de courant efficace (Ieff) à la valeur de courant moyen (Imoy) est compris entre 1.05 et 2, de préférence entre 1,05 et 1,5.

**11.** Procédé selon l'une des revendications 1 à 10, **caractérisé en ce que** la protection gazeuse est constituée d'un gaz ou mélange gazeux choisi parmi l'hélium, l'argon, le dioxyde de carbone, l'oxygène, l'azote et l'hydrogène et/ou **en ce que** le fil fusible a un diamètre compris entre 0.6 mm et 2.2 mm, de préférence entre 0.8 mm et 1.6 mm.

**12.** Procédé selon l'une des revendications 1 à 11, **caractérisé en ce que** le soudage est de type MIG pulsé ou MAG pulsé et/ou **en ce que** le fil est un fil plein ou un fil fourré.

**13.** Dispositif de soudage à l'arc à régime pulsé, susceptible de mettre en oeuvre un procédé selon l'une des revendications 1 à 12, **caractérisé en ce qu'**il comporte:

- des moyens de sélection de fréquence et des paramètres temps (Tp, Th, tm, td) du cycle de pulsation permettant de régler, ajuster ou sélectionner une fréquence de pulsation et des paramètres temps (Tp, Th, tm, td) du cycle de pulsation,
- des moyens de sélection de vitesse de fil permettant de régler, ajuster ou sélectionner une vitesse d'amenée de fil (Vfil),
- des moyens de détermination des valeurs de courant moyen (Imoy) et de courant efficace (Ieff) permettant de déterminer ou calculer au moins une valeur de courant moyen (Imoy) et au moins une valeur de courant efficace (Ieff), telles que :

$$\text{Imoy} = A1 \times \text{Vfil} + B1 \quad \text{avec} \quad 5 < A1 < 45 \quad \text{et} \quad 5 < B1 < 50 \,,$$

et

$$\text{Ieff} \quad = A2 \times \text{Vfil} + B2 \quad \text{avec} \quad 5 < A2 < 45 \quad \text{et} \quad 45 < B2 < 110$$

où Imoy et Ieff sont exprimées en Ampères et Vfil est exprimée en m.min$^{-1}$, et
- des moyens d'ajustage de courant permettant d'ajuster le courant de soudage en réponse à la détermination ou au calcul des valeurs de courant moyen (Imoy) et de courant efficace (Ieff) par lesdits moyens de détermination des valeurs de courant moyen (Imoy) et de courant efficace (Ieff), de préférence il comporte ou est constitué d'au moins un générateur de courant de soudage.

**14.** Installation de soudage comportant au moins un dispositif selon la revendication 13, au moins une torche de soudage, au moins une source de fil de soudage et au moins une source de gaz de protection.

**Claims**

**1.** Process for the arc welding in pulsed mode of one or more workpieces made of carbon steel, stainless steel, aluminium or aluminium alloy, with the use of a gas shield, in which an electric arc welding torch is supplied with at least one consumable wire at a wire feed speed ($V_{wire}$) and the said consumable wire is subjected to current pulses, in order to melt the end of the said consumable wire and to detach a drop of molten metal by a current impulse, **characterized in that**, for a given pulse frequency and given time parameters ($t_{pulse}$, $t_p$, $t_r$, $t_f$) at the pulse cycle, a wire feed speed ($V_{wire}$), a mean current ($I_{mean}$) value and an rms current ($I_{rms}$) value such that:

$$I_{mean} = A_1 V_{wire} + B_1, \text{ where } 5 < A_1 < 45 \text{ and } 0 < B_1 < 50$$

and

$$I_{rms} = A_2 V_{wire} + B_2, \text{ where } 5 < A_2 < 45 \text{ and } 40 < B_2 < 100,$$

where $I_{mean}$ and $I_{rms}$ are expressed in amps and $V_{wire}$ is expressed in m/min, are chosen and/or used.

**2.** Process according to Claim 1, **characterized in that** the workpiece or workpieces to be welded are made of carbon steel and **in that** the mean current ($I_{mean}$) value and the rms current ($I_{rms}$) value, such that:

$$I_{mean} = A_1 V_{wire} + B_1, \text{ where } 20 < A_1 < 40 \text{ and } 0 < B_1 < 30$$

and

$$I_{rms} = A_2 V_{wire} + B_2, \text{ where } 19 < A_2 < 39 \text{ and } 40 < B_2 < 100,$$

where $I_{mean}$ and $I_{rms}$ are expressed in amps and $V_{wire}$ is expressed in m/min, are chosen.

**3.** Process according to Claim 1, **characterized in that** the workpiece or workpieces to be welded are made of stainless steel and **in that** the mean current ($I_{mean}$) value and the rms current ($I_{rms}$) value, such that:

$$I_{mean} = A_1 V_{wire} + B_1, \text{ where } 10 < A_1 < 40 \text{ and } 0 < B_1 < 40$$

and

$$I_{rms} = A_2 V_{wire} + B_2, \text{ where } 9 < A_2 < 39 \text{ and } 40 < B_2 < 100,$$

where $I_{mean}$ and $I_{rms}$ are expressed in amps and $V_{wire}$ is expressed in m/min, are chosen.

4. Process according to Claim 1, **characterized in that** the workpiece or workpieces to be welded are made of aluminium or aluminium alloy and **in that** the mean current ($I_{mean}$) value and the rms current ($I_{rms}$) value, such that:

$$I_{mean} = A_1 V_{wire} + B_1, \text{ where } 5 < A_1 < 30 \text{ and } 0 < B_1 < 20$$

and

$$I_{rms} = A_2 V_{wire} + B_2, \text{ where } 5 < A_2 < 25 \text{ and } 40 < B_2 < 65,$$

where $I_{mean}$ and $I_{rms}$ are expressed in amps and $V_{wire}$ is expressed in m/min, are chosen.

5. Process according to one of Claims 1 to 4, **characterized in that** the wire feed speed ($V_{wire}$) is between 1 and 20 m/min, preferably between 2 and 15 m/min.

6. Process according to one of Claims 1 to 5, **characterized in that** the pulse frequency is between 20 and 300 Hz, preferably between 50 and 200 Hz.

7. Process according to one of Claims 1 to 6, **characterized in that** the ratio ($I_{rms}/I_{mean}$) of the rms current ($I_{rms}$) value to the mean current ($I_{mean}$) value is between 1.05 and 2, preferably between 1.1 and 1.8.

8. Process according to one of Claims 1, 2 or 5 to 7, **characterized in that** the workpiece or workpieces to be welded are made of carbon steel and **in that** the ratio ($I_{rms}/I_{mean}$) of the rms current ($I_{rms}$) value to the mean current ($I_{mean}$) value is between 1.05 and 2, preferably between 1.05 and 1.6.

9. Process according to one of Claims 1, 3 or 5 to 7, **characterized in that** the workpiece or workpieces to be welded are made of stainless steel and **in that** the ratio ($I_{rms}/I_{mean}$) of the rms current ($I_{rms}$) value to the mean current ($I_{mean}$) value is between 1.05 and 2, preferably between 1.1 and 1.8.

10. Process according to one of Claims 1 or 4 to 7, **characterized in that** the workpiece or workpieces to be welded are made of aluminium or aluminium alloy and **in that** the ratio ($I_{rms}/I_{mean}$) of the rms current ($I_{rms}$) value to the mean current ($I_{mean}$) value is between 1.05 and 2, preferably between 1.05 and 1.5.

11. Process according to one of Claims 1 to 10, **characterized in that** the gas shield consists of a gas or gas mixture chosen from helium, argon, carbon dioxide, oxygen, nitrogen and hydrogen and/or **in that** the consumable wire has a diameter of between 0.6 mm and 2.2 mm, preferably between 0.8 mm and 1.6 mm.

12. Process according to one of Claims 1 to 11, **characterized in that** the welding is of the pulsed MIG or pulsed MAG type and **in that** the wire is a solid wire or a flux-cored wire.

13. Pulsed arc welding device, capable of implementing a process according to one of Claims 1 to 12, **characterized in that** it comprises:

- frequency selection means and time parameters ($t_{pulse}$, $t_p$, $t_r$, $t_f$) of the pulse cycle for setting, adjusting or selecting a pulse frequency and time parameters ($t_{pulse}$, $t_p$, $t_r$, $t_f$) of the pulse cycle;
- wire speed selection means for setting, adjusting or selecting a wire feed speed ($V_{wire}$);
- means for determining the mean current ($I_{mean}$) and rms current ($I_{rms}$) values making it possible to determine or calculate at least one mean current ($I_{mean}$) value and at least one rms current ($I_{rms}$) value such that:

$$I_{mean} = A_1 V_{wire} + B_1, \text{ where } 5 < A_1 < 45 \text{ and } 5 < B_1 < 50$$

and

$$I_{rms} = A_2 V_{wire} + B_2, \text{ where } 5 < A_2 < 45 \text{ and } 45 < B_2 < 110,$$

where $I_{mean}$ and $I_{rms}$ are expressed in amps and $V_{wire}$ is expressed in m/min; and

- current adjustment means for adjusting the welding current in response to the determination or calculation of the mean current ($I_{mean}$) and rms current ($I_{rms}$) values by the said means for determining the mean current ($I_{mean}$) and rms current ($I_{rms}$) values;

preferably it includes or consists of at least one welding current generator.

14. Welding unit comprising at least one device according to Claim 13, at least one welding torch, at least one source of welding wire and at least one source of shielding gas.

**Patentansprüche**

1. Verfahren zum Impulslichtbogenschweißen eines oder mehrerer Werkstücke aus Kohlenstoffstahl, rostfreiem Stahl, Aluminium oder einer Aluminiumlegierung mit Einsatz eines Gasschutzes, bei dem ein Lichtbogenschweißbrenner mit mindestens einem Schmelzdraht mit einer Drahtzuführgeschwindigkeit (Vfil) gespeist wird und der Schmelzdraht Stromimpulsen ausgesetzt wird, um ein Schmelzen des Endes des Schmelzdrahtes und das Ablösen eines Tropfens geschmolzenen Metalls durch Stromimpuls zu erzielen, **dadurch gekennzeichnet, dass** für eine gegebene Pulsfrequenz und gegebene Zeitparameter (Tp, Th, tm, td) des Pulszyklus eine Drahtzuführgeschwindigkeit (Vfil), ein durchschnittlicher Stromwert (Imoy) und ein Wirkstromwert (Ieff) gewählt und/oder eingesetzt werden, wie beispiels-weise:

$$Imoy = A1 \times Vfil + B1 \text{ wobei } 5<A1<45 \text{ und } 0<B1<50$$

und

$$Ieff = A2 \times Vfil + B2 \text{ wobei } 5<A2<45 \text{ und } 40<B2<100$$

wobei Imoy und Ieff in Ampere und Vfil in m.min$^{-1}$ ausgedrückt werden.

2. Verfahren nach Anspruch 1, **dadurch gekennzeichnet, dass** das oder die zu verschweißenden Werkstücke aus Kohlenstoffstahl sind, und dass der durchschnittliche Stromwert (Imoy) und der Wirkstromwert (Ieff) derart gewählt werden, dass:

$$Imoy = A1 \times Vfil + B1 \text{ wobei } 20<A1<40 \text{ und } 0<B1<30$$

und

$$Ieff = A2 \times Vfil + B2 \text{ wobei } 19<A2<39 \text{ und } 40<B2<100$$

wobei Imoy und Ieff in Ampere und Vfil in m.min$^{-1}$ ausgedrückt werden.

3. Verfahren nach Anspruch 1, **dadurch gekennzeichnet, dass** das oder die zu verschweißenden Werkstücke aus rostfreiem Stahl sind, und dass der durchschnittliche Stromwert (Imoy) und der Wirkstromwert (Ieff) derart gewählt werden, dass:

$$Imoy = A1 \times Vfil + B1 \text{ wobei } 10<A1<40 \text{ und } 0<B1<40$$

und

$$Ieff = A2 \times Vfil + B2 \text{ wobei } 9<A2<39 \text{ und } 40<B2<100$$

wobei Imoy und Ieff in Ampere und Vfil in m.min$^{-1}$ ausgedrückt werden.

4. Verfahren nach Anspruch 1, **dadurch gekennzeichnet, dass** das oder die zu verschweißenden Werkstücke aus Aluminium oder einer Aluminiumlegierung sind, und dass der durchschnittliche Stromwert (Imoy) und der Wirkstromwert (Ieff) derart gewählt werden, dass:

$$Imoy = A1 \times Vfil + B1 \text{ wobei } 5<A1<30 \text{ und } 0<B1<20$$

und

$$Ieff = A2 \times Vfil + B2 \text{ wobei } 5<A2<25 \text{ und } 40<B2<65$$

wobei Imoy und Ieff in Ampere und Vfil in m.min$^{-1}$ ausgedrückt werden.

5. Verfahren nach einem der Ansprüche 1 bis 4, **dadurch gekennzeichnet, dass** die Drahtzuführgeschwindigkeit (Vfil) zwischen 1 und 20 m.min$^{-1}$, vorzugsweise zwischen 2 und 15 m.min$^{-1}$, beträgt.

6. Verfahren nach einem der Ansprüche 1 bis 5, **dadurch gekennzeichnet, dass** die Pulsfrequenz zwischen 20 und 300 Hz, vorzugsweise zwischen 50 und 200 Hz, beträgt.

7. Verfahren nach einem der Ansprüche 1 bis 6, **dadurch gekennzeichnet, dass** das Verhältnis (Ieff/Imoy) des Wirkstromwerts (Ieff) zum durchschnittlichen Stromwert (Imoy) zwischen 1,05 und 2, vorzugsweise zwischen 1,1 und 1,8, beträgt.

8. Verfahren nach einem der Ansprüche 1, 2 oder 5 bis 7, **dadurch gekennzeichnet, dass** das oder die zu verschweißenden Werkstücke aus Kohlenstoffstahl sind, und dass das Verhältnis (Ieff/Imoy) des Wirkstromwerts (Ieff) zum durchschnittlichen Stromwert (Imoy) zwischen 1,05 und 2, vorzugsweise zwischen 1,05 und 1,6, beträgt.

9. Verfahren nach einem der Ansprüche 1, 3 oder 5 bis 7, **dadurch gekennzeichnet, dass** das oder die zu verschweißenden Werkstücke aus rostfreiem Stahl sind, und dass das Verhältnis (Ieff/Imoy) des Wirkstromwerts (Ieff) zum durchschnittlichen Stromwert (Imoy) zwischen 1,05 und 2, vorzugsweise zwischen 1,1 und 1,8, beträgt.

10. Verfahren nach einem der Ansprüche 1, oder 4 bis 7, **dadurch gekennzeichnet, dass** das oder die zu verschweißenden Werkstücke aus Aluminium oder einer Aluminiumlegierung sind, und dass das Verhältnis (Ieff/Imoy) des Wirkstromwerts (Ieff) zum durchschnittlichen Stromwert (Imoy) zwischen 1,05 und 2, vorzugsweise zwischen 1,05 und 1,5, beträgt.

11. Verfahren nach einem der Ansprüche 1 bis 10, **dadurch gekennzeichnet, dass** der Gasschutz von einem Gas oder einem Gasgemisch gebildet ist, das unter Helium, Argon, Kohlendioxid, Sauerstoff, Stickstoff und Wasserstoff ausgewählt wird, und/oder dass der Schmelzdraht einen Durchmesser zwischen 0,6 mm und 2,2 mm und vorzugsweise zwischen 0,8 mm und 1,6 mm hat.

12. Verfahren nach einem der Ansprüche 1 bis 11, **dadurch gekennzeichnet, dass** das Schweißen vom Typ MIG-Impulsschweißen oder MAG-Impulsschweißen ist, und/oder dass der Draht ein voller Draht oder ein Seelendraht ist.

**13.** Vorrichtung zum Lichtbogenimpulsschweißen, die ein Verfahren nach einem der Ansprüche 1 bis 12 einsetzen kann, **dadurch gekennzeichnet, dass** sie umfasst:

- Mittel zur Auswahl der Frequenz und der Zeitparameter (Tp, Th, tm, td) des Impulszyklus, die es ermöglichen, eine Impulsfrequenz und Zeitparameter (Tp, Th, tm, td) des Impulszyklus einzustellen, anzupassen oder auszuwählen,
- Mittel zur Auswahl der Drahtgeschwindigkeit, die es ermöglichen, eine Drahtzuführgeschwindigkeit (Vfil) einzustellen, anzupassen oder auszuwählen,
- Mittel zur Bestimmung der durchschnittlichen Stromwerte (Imoy) und der Wirkstromwerte (Ieff), die es ermöglichen, mindestens einen durchschnittlichen Stromwert (Imoy) und mindestens einen Wirkstromwert (Ieff) zu bestimmen oder berechnen, wie beispielsweise:

$$\texttt{Imoy = A1 x Vfil + B1 wobei 5<A1<45 und 5<B1<50}$$

und

$$\texttt{Ieff = A2 x Vfil + B2 wobei 5<A2<45 und 45<B2<110}$$

wobei Imoy und Ieff in Ampere und Vfil in m.min$^{-1}$ ausgedrückt werden, und

- Mittel zur Stromanpassung, die es ermöglichen, den Schweißstrom als Antwort auf die Bestimmung oder Berechnung der durchschnittlichen Stromwerte (Imoy) und der Wirkstromwerte (Ieff) durch die Mittel zur Bestimmung der durchschnittlichen Stromwerte (Imoy) und der Wirkstromwerte (Ieff) anzupassen, wobei sie vorzugsweise mindestens einen Schweißstromgenerator umfasst oder von einem solchen gebildet ist.

**14.** Schweißanlage, umfassend mindestens eine Vorrichtung nach Anspruch 13, mindestens einen Schweißbrenner, mindestens eine Schweißdrahtquelle und mindestens eine Schutzgasquelle.

Vf= 4m/min

**Figure 2**

**figure 1**